(19) Europäisches Patentamt
European Patent Office
Office européen des brevets

(11) Numéro de publication : **0 324 302 B1**

# (12) FASCICULE DE BREVET EUROPEEN

(45) Date de publication du fascicule du brevet : **04.03.92 Bulletin 92/10**

(51) Int. Cl.$^5$ : **A01N 47/36,** // (A01N47/36, 37:48)

(21) Numéro de dépôt : **88420437.1**

(22) Date de dépôt : **29.12.88**

## (54) Association herbicide synergique à base de bifénox et de metsulfuron-méthyle.

(30) Priorité : **12.01.88 FR 8800390**

(43) Date de publication de la demande : **19.07.89 Bulletin 89/29**

(45) Mention de la délivrance du brevet : **04.03.92 Bulletin 92/10**

(84) Etats contractants désignés : **AT BE CH DE ES FR GB GR IT LI LU NL SE**

(56) Documents cités : **EP-A- 0 236 273**

(73) Titulaire : **RHONE-POULENC AGROCHIMIE
14-20, rue Pierre Baizet
F-69009 Lyon (FR)**

(72) Inventeur : **Borrod, Guy
38bis, rue des Granges
F-69005 Lyon (FR)**

(74) Mandataire : **Brachotte, Charles et al
RHONE-POULENC AGROCHIMIE 14-20, Rue Pierre Baizet B.P. 9163
F-69263 Lyon Cedex 09 (FR)**

EP 0 324 302 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet une association synergique comprenant le bifénox et le metsulfuron methyle, l'utilisation de cette association comme herbicide notamment sous la forme de compositions herbicides, un procédé de contrôle ou de destruction des mauvaises herbes en prélevée, notamment applicable aux champs de céréales.

On connait de nombreuses sulfonamides herbicides notamment par les brevets US-A-4 127 405 et US-A-4 370 480. Certains de ces composés présentent une activité herbicide sélective des céréales.

Le bifénox est, par ailleurs décrit dans le "Pesticide Manual" 8ème édition, et dans US-A-3 652 645. Cet herbicide est connu notamment pour le désherbage des céréales.

Le document EP-A-236273 décrit l'association synergique de bifenox et de N-[2-(2-chlorethoxy)-phenil sulfonyl]-N'-(4-methoxy-6-methyl-1,3,5-triazin-2-yl)-ur

Le document EP-A-0124295 mentionne également, parmi de très nombreuses possibilités, l'association du bifénox et de certaines sulfonamides herbicides. Mais il s'agit d'une divulgation générique qui ne décrit pas l'effet herbicide surprenant obtenu par la sélection d'une part du bifénox et d'autre part de sulfonamides particulières comme cela va être exposé.

L'invention quant à elle propose une nouvelle association qui résulte d'un choix limité éffectué parmi un nombre pratiquement infini de possibilités et qui procure des avantages importants comme cela sera exposé ci-aprés.

L'association est caractérisée en ce que elle résulte de la combinaison a) du metsulfuron methyle et b) du bifenox dans le rapport en poids a:b compris entre 0,005 et 0,7

De manière surprenante en effet on a trouvé que l'association précitée permettait d'une part d'élargir le spectre d'activité des deux herbicides pris isolément et d'autre part révélait un effet herbicide beaucoup plus élevé que celui qui aurait été attendu.

C'est notamment le cas pour les mauvaises herbes suivantes :

| | |
|---|---|
| graminées | Alopecurus myosuroïdes ou vulpin |
| dicotylédones | Sinapis alba ou moutarde |
| | Galium aparine ou gaillet |

Ainsi, l'association présente un remarquable degré de synergisme comme c'est défini par PML Tammes, Netherlands Journal of Plant Pathology, <u>70</u> (1964), p. 7380 dans un article intitulé "Isoboles, une représentation graphique de synergie dans les pesticides" ou comme défini par Limpel, L.E., P.H. Schuldt and D. Lamont, 1962, Proc. NEWCC 16:48-53, en utilisant la formule :

$$E = X + Y - \frac{XY}{100}$$

où

E est le pourcentage attendu d'inhibition de la croissance par un mélange des deux herbicides à des doses définies,

X est le pourcentage d'inhibition observé de la croissance par l'herbicide A à une dose définie,

Y est le pourcentage d'inhibition observé de la croissance par l'herbicide B à une dose définie.

Quand le pourcentage d'inhibition observé de l'association est plus grand que E il y a synergie.

Cette synergie permet de diminuer considérablement la dose normalement requise ce qui induit plusieurs avantages :

– moins de produits résiduels dans le sol,
– diminution des coûts,

De préférence, on utilisera une association dans laquelle le rapport en poids sulfonamide de formule (I) : bifénox est compris entre 0,008 et 0,8.

Pour leur emploi pratique, les associations selon l'invention sont rarement utilisées seules. Le plus souvent ces associations font partie de compositions. Ces compositions, utilisables comme agents herbicides, contiennent comme matière active une association selon l'invention tel que décrit précédemment, en mélange avec des supports solides acceptables en agriculture et les agents tensio-actifs également acceptables en agriculture. En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... . Plus généralement les associations utilisées dans l'invention peuvent être combinées à tous les additifs solides correspondant aux techniques habituelles de la mise en formulation.

Les doses d'emploi des associations utilisées dans l'invention peuvent varier dans de larges limites, notamment selon la nature des mauvaises herbes à éliminer et le degré d'infestation habituel des cultures pour ces mauvaises herbes.

D'une façon générale, les compositions selon l'invention contiennent habituellement de 0,05 à 95 % environ (en poids) d'une association selon l'invention.

Par le terme "support", dans le présent exposé, on désigne une matière organique ou minérale, naturelle ou synthétique, avec laquelle l'association est combinée pour faciliter son application sur la plante, sur des graines ou sur le sol. Ce support est donc généralement inerte et il doit être acceptable en agriculture, notamment sur la plante traitée. Le support est solide (argiles, silicates naturels ou synthétiques, silice, résines, cires, engrais solides, etc...).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque l'un des deux composés au moins de l'association et/ou le support inerte ne sont pas solubles dans l'eau et que l'agent vecteur de l'application est l'eau.

Pour leur application, les associations de formule (I) se trouvent donc généralement sous forme de compositions.

Comme formes de compositions solides, on peut citer les poudres pour poudrage (à teneur en association pouvant aller jusqu'à 100 %) et les granulés, notamment ceux obtenus par extrusion, par compactage, par imprégnation d'un support granulé, par granulation à partir d'une poudre (la teneur en association dans ces granulés étant entre 0,5 et 80 % pour ces derniers cas).

Les poudres mouillables (ou poudre à pulvériser) sont habituellement préparées de manière qu'elles contiennent 20 à 95 % d'association, et elles contiennent habituellement, en plus du support solide, de 0 à 5 % d'un agent mouillant, de 3 à 10 % d'un agent dispersant, et, quant c'est nécessaire, de 0 à 10 % d'un ou plusieurs stabilisants et/ou autres additifs, comme des agents de pénétration, des adhésifs, ou des agents antimottants, colorants, etc..

A titre d'exemple, voici diverses compositions de poudres mouillables (Exemple 1) :

| | |
|---|---|
| - association | 50 % |
| - lignosulfonate de calcium (défloculant) | 5 % |
| - isopropylnaphtalène sulfonate (agent mouillant anionique) | 1 % |
| - silice antimottante | 5 % |
| - kaolin (charge) | 39 % |

Exemple 2 :

| | |
|---|---|
| - association | 80 % |
| - alkylnaphtalène sulfonate de sodium | 2 % |
| - lignosulfonate de sodium | 2 % |
| - silice antimottante | 3 % |
| - kaolin | 13 % |

Exemple 3 :

| | |
|---|---|
| - association | 50 % |
| - alkylnaphtalène sulfonate de sodium | 2 % |
| - méthyl cellulose de faible viscosité | 2 % |
| - terre de diatomées | 46 % |

Exemple 4 :

| | |
|---|---|
| - association | 400 g |
| - lignosulfonate de sodium | 50 g |
| - dibutylnaphtalène sulfonate de sodium | 10 g |
| - silice | 540 g |

Exemple 5 :

| | |
|---|---|
| - association | 250 g |
| - isooctylphénoxy-polyoxyéthylène-éthanol | 25 g |
| - mélange équipondéral de craie de Champagne et d'hydroxyéthylcellulose | 17 g |
| - aluminosilicate de sodium | 543 g |
| - kieselguhr | 165 g |

Exemple 6 :

| | |
|---|---|
| - association | 100 g |
| - mélange de sels de sodium de sulfates d'acides gras saturés | 30 g |
| - produit de condensation d'acide naphtalène sulfonique et de formaldéhyde | 50 g |
| - kaolin | 820 g |

Pour obtenir ces poudres à pulvériser ou poudres mouillables, on mélange intimement les matières actives dans des mélangeurs appropriés avec les substances additionnelles ou on imprègne l'un ou l'autre ou les deux composés de l'association sur la charge poreuse et on broie avec des moulins ou autres broyeurs appropriés. On obtient par là des poudres à pulvériser dont la mouillabilité et la mise en suspension sont avantageuses; on peut les mettre en suspension avec de l'eau à toute concentration désirée.

Les granulés "autodispersibles" (en langue anglaise "dry flowable" ; il s'agit plus exactement de granulés facilement dispersibles dans l'eau) ont une composition sensiblement voisine de celle des poudres mouillables. Ils peuvent être préparés par granulation de formulations décrites pour les poudres mouillables, soit par voie humide (mise en contact de l'association finement divisée avec la charge inerte et avec un peu d'eau, par exemple 1 à 20%, ou de solution aqueuse de dispersant ou de liant, puis séchage et tamisage) soit par voie sèche (compactage puis broyage et tamisage).

A titre d'exemple, voici une formulation de granulé autodispersible (Exemple 7) :

| | |
|---|---|
| - association | 800 g |
| - alkylnaphtalène sulfonate de sodium | 20 g |
| - méthylène bis naphtalène sulfonate de sodium | 80 g |
| - kaolin | 100 g |

A la place des poudres mouillables, on peut réaliser des pâtes. Les conditions et modalités de réalisation et d'utilisation de ces pâtes sont semblables à celles des poudres mouillables ou poudres à pulvériser.

Les granulés destinés à être disposés sur le sol sont habituellement préparés de manière qu'ils aient des dimensions comprises entre 0,1 et 2 mm et ils peuvent être fabriqués par agglomération ou imprégnation. De préférence, les granulés contiennent 1 à 95 % d'association et 0 à 50 % d'additifs comme des stabilisants, des agents de modification à libération lente, des liants et des solvants.

Selon un exemple de composition de granulé, on utilise les constituants suivants (Exemple 8) :

| | |
|---|---|
| - association | 50 g |
| - propylène glycol | 25 g |
| - huile de lin bouillie | 50 g |
| - argile (granulométrie : 0,3 à 0,8 mm) | 910 g |

Les associations éventuellement sous forme de compositions décrites ci-avant sont destinées au traitement herbicide en prélevée des mauvaises herbes. L'utilisation conjointe ci-dessus offre une activité rémanente.

Il est avantageux d'utiliser des produits prêts à l'emploi contenant l'association des matières actives éventuellement sous forme de compositions. On peut également utiliser des produits préparés juste avant l'emploi, par mélange extemporané des matières actives ou des compositions contenant chacune des matières actives.

On entend désigner par l'expression "application en prélevée" l'application au sol dans lequel les graines ou plantules des mauvaises herbes sont présentes, avant la levée des mauvaises herbes au-dessus de la surface du sol. L'expression "activité rémanente" est utilisée pour désigner l'activité herbicide produite par application sur le sol dans lequel les graines ou plantules des mauvaises herbes sont présentes avant la levée des mauvaises herbes au dessus de la surface du sol, permettant de combattre les plantules présentes au moment de l'application ou qui germent, après l'application, à partir de graines présentes dans le sol.

Des mauvaises herbes qui peuvent être combattues par le procédé comprennent : Amaranthus retroflexus, Anagallis arvensis, Anthemis arvensis, Anthemis cotula, Atriplex patula, Brassica nigra, Capsella bursa-pastoris, Chenopodium album, Galeopsis tetrahit, Galium aparine, Lamium amplexicaule, Lamium purpureum, Matricaria inodora, Myosotis arvensis, Papaver rhoeas, Plantago lanceolata, Polygonum spp. (par exemple Polygonum aviculare, Polygonum convolvulus et Polygonum persicaria), Raphanus raphanistrum, Senecio vulgaris, Silene alba, Sinapis arvensis, Solanum nigrum, Stellaria nedia, Thlaspi arvense, Urtica urens, Veronica hederifolia, Veronica persica, Viola arvensis, ,Alopecurus myosuroides.

Ainsi, l'invention a également pour objet un procédé pour combattre les mauvaises herbes en pré-levée, particulièrement en un lieu de culture de céréales comme par exemple le blé, l'orge, l'avoine, le seigle, caractérisé en ce que l'on applique en leur endroit une dose efficace d'une association ou d'une composition telle que définie ci-dessus. On appliquera de préférence les associations ou compositions décrites ci-dessus à raison de 5 à 70 g/ha de metsulfuron methyle de formule (I) et 100 à 1000 g/ha de bifénox et de préférence à raison de 6 à 20 g/ha de methsulfuron methyle de formule (I) et 250-750 g/ha de bifénox.

Exemple 9 :

Essai montrant la nature de l'effet synergique biologique de l'association metsulfuron méthyl-bifénox sur Sinapis alba (moutarde blanche)

Dans des pots de 7 x 7 x 8 cm remplis de terre agricole légère, on sème des graines de Sinapis alba. On recouvre ensuite les graines d'une couche de terre d'environ 3 mm d'épaisseur.

Les pots sont traités par pulvérisation d'une quantité correspondant à une dose d'application, en volume, de 500 l/ha, contenant l'association à la concentration désirée. Le mélange pour pulvérisation est préparé en mélangeant :

- de l'eau,
- une suspension concentrée à 480 g/l de bifénox (MODOWN® 4 F)
- une formulation granulée dispersable à 20 % de metsulfuron méthyl ( ALLIE® )

Le traitement avec la bouillie est donc effectué sur des graines recouvertes de terre (on utilise le terme de bouillie pour désigner, en général, les compositions diluées à l'eau, telles qu'on les applique sur les végétaux ou sur le sol).

Différentes concentrations des matières actives du liquide de pulvérisation sont utilisées, correspondant à différentes doses des matières actives appliquées.

Les pots traités sont ensuite placés dans des bacs destinés à recevoir de l'eau d'irrigation par subirrigation, et ils sont maintenus à température ambiante pendant 24 jours à une humidité relative de 70 %.

24 jours après traitement, on compte le nombre de plantes vivantes dans les pots traités par le liquide de pulvérisation contenant l'association à tester, et on compte également le nombre de plantes vivantes dans un pot témoin traité suivant les mêmes conditions mais au moyen d'un liquide de pulvérisation ne contenant pas de matières actives. Le pourcentage égal à 100 % indique qu'il y a une destruction totale de l'espèce de plante considérée, et un pourcentage égal à 0 % indique que le nombre de plantes vivantes dans le pot traité est identique à celui dans le pot-témoin.

Sinapis alba

| | | 250g | 500g | 1000g | Bifénox |
|---|---|---|---|---|---|
| | | 0 | 0 | 0 | |
| 8g | 60 | 80 | 85 | 60 | |
| 16g | 70 | 80 | 90 | 90 | |
| 31g | 80 | 95 | 85 | 90 | |
| metsulfuron méthyl | | | | | |

Exemple 10 :

Essai montrant la nature de l'effet synergique biologique de l'association metsulfuron méthyl-bifénox sur Galium aparine

L'expérimentation est conduite selon celle décrite à l'exemple 9 en ayant semé des graines de Galium aparine (gaillet).

Les résultats indiqués dans le tableau ci-dessous montrent clairement, en se référant à la formule indiquée en début de description le degré excellent et inattendu de synergie obtenue avec l'association de l'invention

Galium aparine

| | | 250g | 500g | 1000g | Bifénox |
|---|---|---|---|---|---|
| | | 0 | 0 | 10 | |
| 8g | 0 | 0 | 20 | 30 | |
| 16g | 0 | 0 | 30 | 80 | |
| 31g | 10 | 10 | 60 | 80 | |
| metsulfuron méthyl | | | | | |

Exemple 11 :

Essai montrant la nature de l'effet synergique biologique de l'association metsulfuron methyl-bifénox sur Alopecurus myosuroides

L'expérimentation est conduite selon celle décrite à l'exemple 9 en ayant semé des graines d'Alopecurus myosuroides (vulpin).

Les résultats indiqués dans le tableau ci-dessous montrent clairement, en se référant à la formule indiquée en début de description le degré excellent et inattendu de synergie obtenue avec l'association de l'invention

Alopecurus myosuroïdes (vulpin)

| metsulfuron méthyl | | 250g | 500g | 1000g Bifénox |
|---|---|---|---|---|
| | | 0 | 10 | 20 |
| 16g | 30 | 20 | 30 | 70 |
| 31g | 50 | 50 | 60 | 80 |
| 62g | 60 | 60 | 70 | 90 |

## Revendications

1. Association herbicide à effet synergique résultant de la combinaison a) du metsulfuron methyle et b) du bifenox dans le rapport en poids a:b compris entre 0,005 et 0,7.

2. Association selon la revendication 1, caractérisée en ce que le rapport en poids a:b est compris entre 0,008 et 0,08.

3. Procédé de contrôle des mauvaises herbes en prélevée, notamment dans les cultures de céréales, caractérisé en ce que l'on applique une association selon la revendication 1 ou 2 à raison de 4 à 70 g/ha de metsulfuron methyle et 100 à 1000 g/ha de bifenox.

4. Procédé selon la revendication 3, caractérisé en ce que l'on applique l'association à raison de 5 à 20 g de metsulfuron methyle et 250 à 750 g de bifenox.

5. procédé de contrôle des mauvaises herbes selon l'une des revendications 3 ou 4, caractérisé en ce que les mauvaises herbes sont choisies parmi Sinapis alba, Alopecurus myosuroïdes, Galium aparine.

## Patentansprüche

1. Herbizide Kombination mit synergetischer Wirkung, erhalten durch Kombinieren von a) Methylmetsulfuron und b) Bifenox im Gewichtsverhältnis von a : b zwischen 0,005 und 0,7.

2. Kombination nach Anspruch 1, dadurch gekennzeichnet, daß das Gewichtsverhältnis von a : b zwischen 0,008 und 0,08 liegt.

3. Verfahren zur Bekämpfung von Unkräutern vor dem Auswuchs, insbesondere in Getreidekulturen, dadurch gekennzeichnet, daß man eine Kombination nach Anspruch 1 oder 2 mit einer Konzentration von 4 bis 70 g/ha Methylmetsulfuron und 100 bis 1000 g/ha Bifenox aufbringt.

4. Verfahren nach Anspruch 3, dadurch gekennzeichnet, daß man die Kombination mit einer Konzentration von 5 bis 20 g/ha Methylmetsulfuron und 250 bis 750 g/ha Bifenox aufbringt.

5. Verfahren zur Bekämpfung von Unkräutern nach Anspruch 3 oder 4, dadurch gekennzeichnet, daß die Unkräuter aus Sinapis alba, Alopecurus myosuroides und Galium aparine ausgewählt sind.

## Claims

1. A herbicidal combination having a synergistic effect resulting from the combination of (a) metsulfuron-methyl and (b) bifenox in the ratio by weight a:b of between 0.005 and 0.7.

2. The combination according to claim 1, wherein the ratio by weight a:b is between 0.008 and 0.08.

3. A process for controlling weeds in the pre-emergent state, in particular in cereal crops, wherein a combination according to claim 1 or 2 is applied on the basis of 4 to 70 g/ha of metsulfuron-methyl and 100 to 1,000 g/ha of bifenox.

4. The process according to claim 3, wherein the combination is applied on the basis of 5 to 20 g of metsulfuron-methyl and 250 to 750 g of bifenox.

5. The process for controlling weeds according to one of claims 3 and 4, wherein the weeds are chosen from Sinapis alba, Alopecurus myosuroides and Galium aparine.

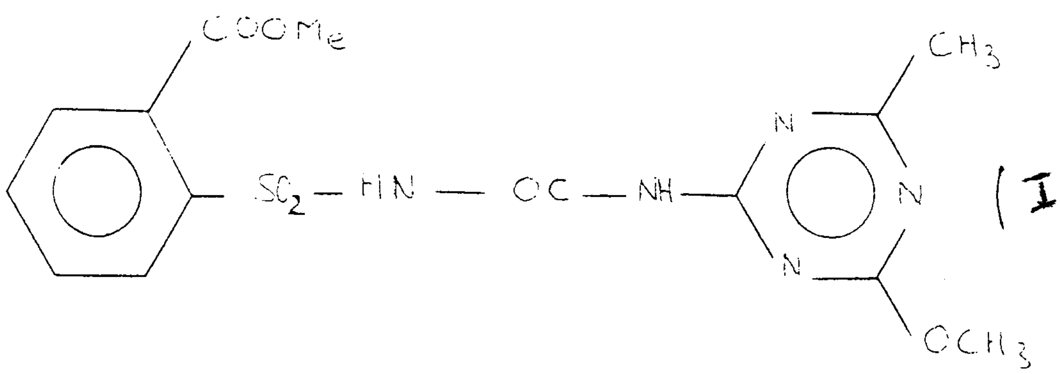

(I)